Europäisches Patentamt

European Patent Office

Office européen des brevets

(19)

(11) Numéro de publication: **0 216 711 B1**

(12) **FASCICULE DE BREVET EUROPEEN**

(45) Date de publication du fascicule du brevet:
18.10.89

(51) Int. Cl.⁴: **B 01 D 29/30,** B 01 D 13/00,
C 10 G 31/09

(21) Numéro de dépôt: 86402101.9

(22) Date de dépôt: 24.09.86

(54) **Procédé de séparation de fines particules de catalyseur, d'une charge hydrocarbonée, par filtration au travers de barrières minérales et boucle de filtration.**

(30) Priorité: 25.09.85 FR 8514193

(43) Date de publication de la demande:
01.04.87 Bulletin 87/14

(45) Mention de la délivrance du brevet:
18.10.89 Bulletin 89/42

(84) Etats contractants désignés:
AT BE DE GB IT NL

(56) Documents cités:
CH-A- 497 910
FR-A- 2 228 518
US-A- 4 060 488
US-A- 4 285 805
US-A- 4 372 859

SCHIFF & HAFEN/KOMMANDOBRÜCKE, vol. 32, no. 9,
septembre 1980, pages 229-233, Uetersen, DE; R.
LENNARTZ: "Filtertechnische Aufbereitung von
Schwerölen"

(73) Titulaire: **COMPAGNIE DE RAFFINAGE ET DE
DISTRIBUTION TOTAL FRANCE: Société Anonyme dite,
5, rue Michel Ange, F-75781 Paris Cédex 16 (FR)**

(72) Inventeur: **Sigaud, Jean-Bernard, 18, Boulevard de la
République, F-92420 Vaucresson (FR)**
Inventeur: **Rossarie, Jean, 3, rue Marceau Flandre,
F-76600 Le Havre (FR)**

(74) Mandataire: **Jolly, Jean-Pierre et al, Cabinet BROT et
JOLLY 83, rue d'Amsterdam, F-75008 Paris (FR)**

# Description

L'invention concerne les techniques de séparation. Elle a trait plus spécifiquement à un procédé de séparation de fines particules de catalyseur, d'une charge hydrocarbonée issue d'une unité de craquage catalytique, ainsi qu'à une boucle de filtration, pour la mise en oeuvre d'un tel procédé.

Par charge hydrocarbonée, on comprend dans la suite du présent mémoire, une charge composée principalement d'hydrocarbures, pouvant contenir outre des atomes de carbone et d'hydrogène, d'autres atomes tels que l'oxygène, le soufre, etc. De telles charges peuvent être constituées notamment, mais non exclusivement, par des pétroles bruts ou des produits obtenus par raffinage du pétrole brut, comme par exemple le résidu dit slurry obtenu après craquage catalytique ainsi qu'il sera décrit ci-après, sans que ce choix puisse constituer une quelconque limitation à la présente invention.

Le craquage catalytique est un procédé largement connu qui consiste à casser les molécules contenues dans une charge hydrocarbonée sous l'action de la chaleur, en présence de catalyseurs, typiquement en lit fluidisé. Pour cette raison, le catalyseur est constitué de fines particules, dont la taille moyenne est d'environ 70 µm et dont une partie (les plus petites) se trouve entraînée avec les produits de la réaction, et se concentre dans le résidu qui est soutiré au fond de la colonne de fractionnement.

Ce résidu est utilisé comme produit fluxant (base à faible viscosité) dans la fabrication des fiouls industriels.

La présence de fines particules de catalyseur, de taille généralement comprise entr 0 et 50 µm, et qui ne peuvent être éliminées par des moyens classiques de filtration, a pour effet de rendre le produit impropre à certains usages (fioul marine par exemple) de provoquer des encrassements sévères de chaudières et des fours industriels par combinaison avec certains métaux lourds, tels que le vanadium contenus dans d'autres composants du fioul tels que les bases visqueuses du type résidu sous vide.

Le phénomène tend à s'aggraver du fait que la capacité de craquage catalytique augmente, et avec elle la production de slurry, alors que par ailleurs, la production de bases visqueuses diminue et que la concentration en métaux lourds de ces bases augmente.

Séparer les fines de catalyseur du résidu de craquage, devient donc une nécessité et divers procédés de séparation ont ainsi été testés puis proposés aux diverses raffineries.

Parmi les divers procédés de l'art antérieur, il convient de citer le procédé de séparation par hydrocyclone et le procédé de séparation par électrophorèse, dit également procédé GULFTRONIC.

Mais ces procédés de par leur principe ne permettent de retirer qu'une partie des fines contenues dans le slurry, et leur coût augmente très rapidement dès que l'on recherche une efficacité élevée. De plus, l'évacuation des fines ainsi séparées nécessite un fluide extérieur, généralement la charge du craqueur elle-même, ce qui conduit à recycler les fines de catalyseur, au réacteur, et ainsi à alimenter le phénomène, sauf à rejecter cet effluent et subir une perte notable de valorisation du brut.

Par exemple, par le brevet US-A-4 285 805, on connaît un procédé de rétention de fines de catalyseurs par un phénomène électrostatique. Le résidu de fond de colonne ou «slurry oil» issu du fractionnement du fluide provenant d'un craqueur catalytique est envoyé dans un filtre comprenant des billes de verre, placées dans un champ électrique important. Toutefois, le problème posé par ce type de procédé est que la rétention des fines sur les billes de verre n'est plus assurée de façon efficace, au-delà d'une certaine quantité, en raison de l'obstruction du filtre. Il faut alors arrêter le flux, couper le champ électrique et faire passer un flux en sens inverse, pour ramener les fines jusqu'au craqueur.

La Demanderesse a donc cherché à obtenir un procédé de séparation plus efficace, capable d'éliminer totalement les particules dont le diamètre était supérieur à un diamètre minimal dit de coupure, en les concentrant dans le slurry lui-même, ce qui permet de les évacuer hors du système, à moindre coût.

On y parvient par le procédé de séparation selon la revendication 1.

Un procédé de séparation au moyen de barrières minérales est déjà décrit dans le brevet EP-A-0 041 013 dans une application à la régénération d'huile usée, mais il s'agit de barrières différentes de celles de la présente demande. Lesdites barrières sont en effet des barrières d'ultrafiltration avec un diamètre de pores de l'ordre de l'angström et sont constituées d'un support céramique sur lequel est déposée une couche sensible d'oxydes métalliques, alors que les barrières selon la demande ont un diamètre de pore de l'ordre du µm et comprenant un support en carbone.

En outre, si la barrière d'ultrafiltration du brevet EP-A-0 041 013 peut retenir les résidus solides minuscules venant de la deuxième centrifugation (68), il n'est pas évident qu'elle résiste à un flux de slurry contenant une part importante de fines de catalyseur, très abrasives, qui pourrait abîmer très rapidement la couche sensible interne des barrières. Il a donc fallu lutter contre le préjugé qui conduisait l'homme du métier à rejeter les procédés de rétention par des barrières minérales, parce qu'elles ne résisteraient pas à l'abrasion du fait de la circulation à très grande vitesse de particules abrasives dans une boucle de microfiltration.

La présente invention concerne également une boucle de filtration selon la revendication 3.

La description qui va suivre en regard des dessins annexés, donnés à titre non limitatif, permettra de mieux comprendre comment l'invention se réalise, et ainsi de mieux en apprécier sa portée. Sur les dessins:

La figure 1 représente en coupe un module de filtration; et

La figure 2 représente schématiquement le procédé de filtration appliqué à la séparation des fines de catalyseur du résidu de craquage catalytique (slurry).

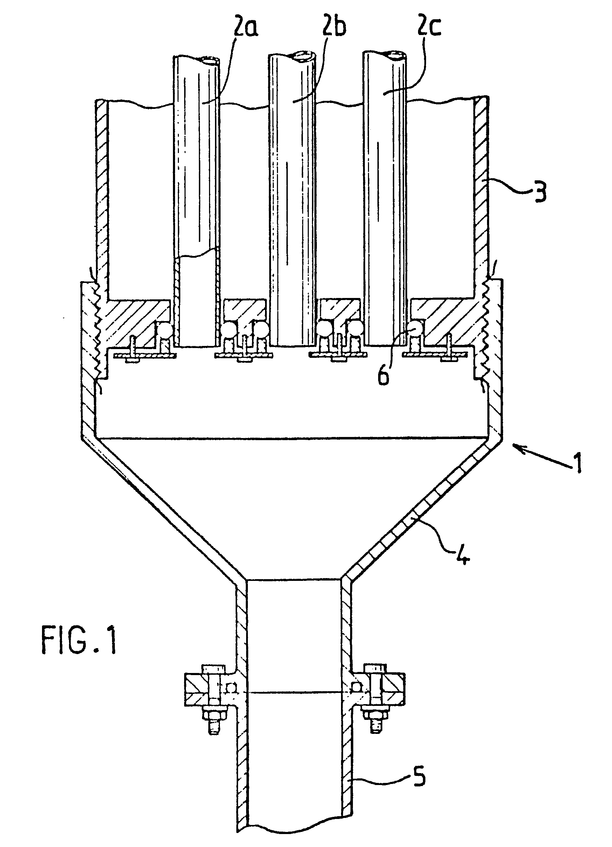

On a représenté à la figure 1, un module de microfiltration 1, constitué de plusieurs barrières minérales 2a, 2b, ..., montées en parallèles dans une calandre 3. Un cône de raccordement 4 relie la calandre 3 à la tuyauterie de circulation 5, par un assemblage vis-écrou. Le concentrat circulant dans la boucle pénètre dans le module par la tuyauterie 5, circule à l'intérieur des barrières 2, puis ressort ensuite par une tuyauterie parallèle, non représentée ici comme ne faisant pas à proprement parler partie de l'invention. Le filtrat est la fraction de la charge qui passe au travers des barrières 2, de l'intérieur vers l'extérieur, du fait de la différence de pression qui règne entre ces deux zones qui peut atteindre et même depasser une dizaine de bars. Pour assurer l'étanchéité entre, d'une part, la zone de haute pression constituée par la tuyauterie 5 et l'intérieur des barrières, et, d'autre part, la zone de basse pression constituée par l'intérieur des barrières, il est nécessaire de prévoir des moyens d'étanchéité, sous la forme de joints toriques ou cylindriques, par exemple en viton ou graphite, selon la température du concentrat qui circule dans la boucle.

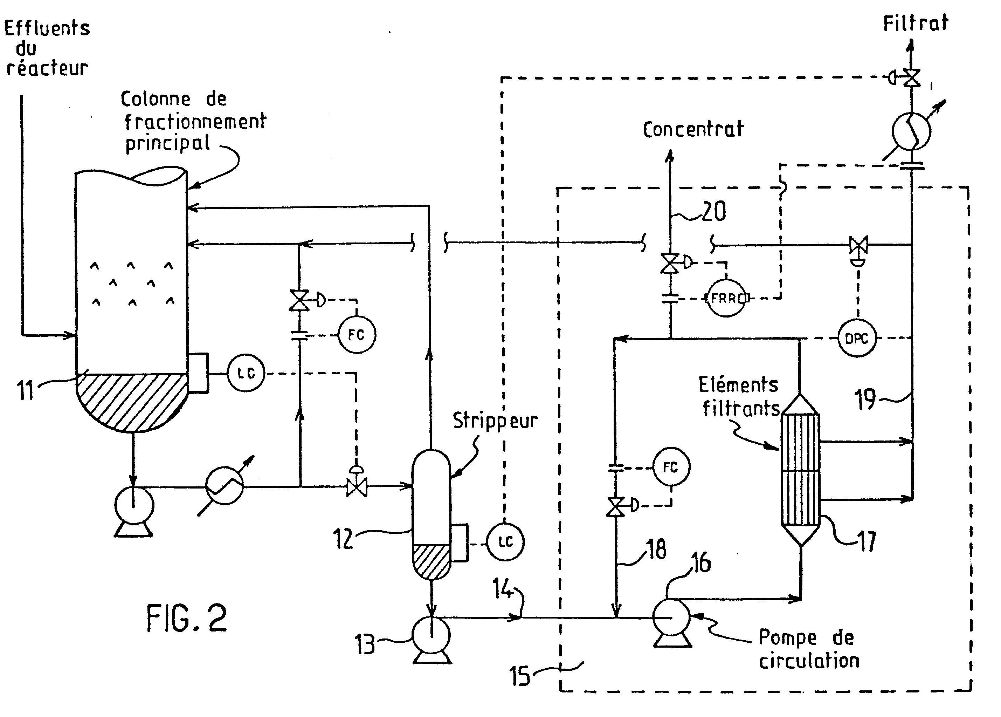

On a représenté à la figure 2 un schéma d'une installation de craquage catalytique, comportant une boucle de filtration selon la présente invention.

La référence 11 sybolise ainsi une colonne de fractionnement d'une unité de craquage catalytique.

Une telle colonne et plus généralement l'unité de craquage catalytique ainsi que ses conditions de fonctionnement ou de réglage ne seront pas décrits plus avant dans le présent mémoire comme ne faisant pas partie à proprement parler de la présente invention, et l'on pourra se référer plus utilement aux ouvrages de base en la matière, tels que le WUITHIER, Tome I, Chap. II. D'une telle colonne 11 est soutiré un résidu de craquage, qui est d'abord strippé à la vapeur dans une colonne 12, puis envoyé via la pompe de reprise 13 et la conduite d'amenée 14, vers la boucle de filtration 15, objet spécifique de l'invention.

Le résidu de soutirage (ou slurry) chargé de fines particulles de catalyseur, comme expliqué ci-avant, est introduit par la conduite d'amenée 14, dans la boucle de filtration 15. Cette boucle se compose d'une pompe de circulation 16 d'un assemblage série-parallèle (par exemple quatre modules en série, de 250 barrières chacun, montés comme décrit à la figure précédente) de barrières 17, et d'une tuyauterie de circulation 18. Des conduites d'évacuation du filtrat 19 et du concentrat 20 sont également prévues, qui permettent de recueillir d'une part, une charge hydrocarbonée exempte de fines particules dans un bac de stockage, et d'autre part, d'évacuer le concentrat. Enfin, une telle boucle 15 est munie de moyens de mesure et de contrôle, tels qu'un contrôle de débit, référencé FC (pour «flow-control»), de température, référencé TC (pour «temperature-control»), et éventuellement un contrôle de vitesse de circulation, référencé SC (pour «speed-control») En outre, il existe des liaisons au niveau des moyens de contrôle, entre la boucle de filtration et l'unité de craquage catalytique; ainsi, le contrôle du débit de filtrat est asservi à la mesure du niveau dans la colonne de strippage 12; de même, une recycle du filtrat vers la colonne de fractionnement principale 11 est asservie à la mesure de la différence de pression (DPC) entre les deux zones haute et basse pression, de la boucle de filtration et de la sortie du filtrat. Enfin, le débit de concentrat est asservi au débit de filtrat, de telle sorte que le rapport entre ces deux débits s'établisse à une valeur de consigne, au moyen d'une vanne-proportionneuse (FRRC).

Les barrières minérales, destinées à équiper une boucle de filtration, sont caractérisées par leurs rayons de perméamétrie. Ces barrières sont disponibles dans le commerce pour des rayons de perméamétrie comprises, pour une première gamme, entre 2 et 100 nm (et dans ce cas, on parle alors d'ultrafiltration), et pour une seconde gamme, utilisée dans ce type particulier d'application, entre 0,1 $\mu$m et 100 $\mu$m (et on parle alors de microfiltration).

Les impuretés, présentes dans la charge hydrocarbonée introduite dans la boucle de filtration, sont retenues par lesdites barrières, alors que la charge elle-même, dans laquelle lesdites impuretés se trouvaient (en suspension ou en solution, selon les cas), filtre au travers des couches sensibles, constitutives de la paroi interne desdites barrières. Par conséquent, la concentration en impuretés agumente dans la boucle jusqu'à atteindre un niveau d'équilibre, défini par les débits de soutirage du filtrat et du concentrat, ou même plus précisément par le rapport entre ces deux débits, dit taux de concentration qui est ajusté au moyen d'une vanne-proportionneuse montée sur la sortie du concentrat. Il circule donc à l'intérieur de cette boucle du concentrat, que l'on soutire continûment de telle sorte que le flux entrant (charge hydrocarbonée, par exemple slurry) soit égal au flux sortant (filtrat et concentrat). Enfin, un tel système est autonettoyant, le concentrat circulant dans la boucle étant animé d'une vitesse tangentielle importante (provoquée par la pompe de circulation), de telle sorte qu'il nettoie en permanence la surface de la couche sensible intérieure des barrières, et entraîne avec lui toutes les impuretés qui n'ont pas pu passer au travers de cette (ou ces) couche(s). Ce nettoyage permanent n'altère pas, ou très peu, les couches sensibles, puisque les divers essais conduits par la Demanderesse, ont montré que les barrières avaient une durée de vie relativement longue, supérieure à une année. En cas de colmatage d'une barrière, ou de l'ensemble des barrières d'un module, par suite d'un incident ou de conditions opératoires inappropriées, il peut alors être nécessaire de procéder à une opération de décolmatage, et ceci peut se faire très facilement soit en exerçant une contrepression de l'extérieur vers l'intérieur des barrières, soit en faisant circuler le concentrat dans la boucle, sans soutirage, avec ou sans promoteurs de turbulence, soit encore en purgeant le circuit, et en y introduisant un fluide adéquat que l'on fait circuler. Ces fluides de décolmatage sont très divers, et dépendent généralement de la charge qui circule normalement dans les barrières: ce sont typiquement des solvants, et l'on citera pour exemple le diluant léger catalytique dans les cas d'utilisation d'une charge composée d'un slurry.

*Essai expérimental*

La Demanderesse a réalisé un essai, dans des conditions réelles de fonctionnement d'une telle boucle, sur le pilote de filtration qu'elle détient dans son Centre de Recherches, équipé de barrières adéquates.

Ce pilote est équipé d'un module de trois barrières représentant une surface filtrante de 0,066 m². Cet essai s'est poursuivi pendant 100 heures, après stabilisation du taux de concentration à 20, aux conditions opératoires suivantes:

température: 330°C

pression en sortie de barrières: 4,5 bars

vitesse linéaire: 5m/sec.

Les teneurs en fines de catalyseur (d'un diamètre moyen d'environ 20 µm) des charges, filtrat et concentrat, sont respectivement de 1500 ppm, inférieure à 50 ppm et 3%. L'analyse de ces teneurs a eu lieu par filtration PCAS 118. Le rendement en filtrat est de l'ordre de 95%.

*Essai industriel*

Ces résultats ont été jugés suffisamment encourageants pour justifier la construction d'une boucle de démonstration, de caractère modulaire dans un site industriel de façon à permettre une extension et une maintenance aisée exploitée par la Demanderesse.

Il est évident de la description qui précède, que de nombreuses modifications ou variantes peuvent être imaginées par l'homme de l'art, sans pour cela sortir du cadre de la présente invention, tel que défini par les revendications ci-annexées. Notamment, un tel procédé s'appliquera avec la même efficacité aux autres types de solides présents dans le slurry (coke, rouille, ...) et ne dépendra que de la granulométrie de ceux-ci, eu égard à la porosité des barrières utilisées. Il pourra également s'appliquer à tout autre type de charge, en vue de séparer la fraction solide (ou une grande partie de celle-ci) de la fraction liquide.

## Revendications

1. Procédé de séparation de fines particules de catalyseur, d'une charge hydrocarbonée issue d'une unité de craquage catalytique (11), caractérisée en ce que l'on filtre ladite charge au travers de barrières minérales de microfiltration (1) constituées d'un support de carbone résistant à la chaleur et revêtu du côté de la charge à filtrer d'une couche sensible en oxyde(s) métallique(s) présentant une porosité comprise entre 1 et 100 µm.

2. Procédé de séparation selon la revendication 1, dans lequel on envoie la charge à traiter vers une boucle de microfiltration (15), comprenant un assemblage série-parallèle de barrières minérales de microfiltration à l'intérieur desquelles on fait circuler un concentrat, on recueille un filtrat issu de ces barrières exempt de particules de diamètre supérieur à un diamètre minimal, et on évacue une partie dudit concentrat, riche en ces mêmes particules, caractérisé en ce que l'on modifie le rapport entre le débit du filtrat et celui de concentrat en fonction des qualités de la charge disponible et du filtrat que l'on désire recueillir, par action sur une vanne-proportionneuse (FRRC).

3. Boucle de microfiltration (15) pour la mise en oeuvre du procédé selon la revendication 2, comportant un assemblage série-parallèle de barrières minérales de microfiltration (2), constituées d'un support sous la forme d'un tube cylindrique en carbone recouvert intérieurement par une (ou des) couche(s) d'oxyde, de granulométrie appropriée, relié par une tuyauterie disposée sous forme d'une boucle, à l'intérieur de laquelle peut circuler le concentrat, des moyens d'introduction dans ladite boucle de la charge sous la forme d'une conduite d'amenée (11) et d'une pompe de charge (13) et des moyens d'évacuation du filtrat (19) et du concentrat (20), caractérisée en ce qu'elle comporte en outre des moyens de mesure et de contrôle des débits, éventuellement des moyens de mesure et de contrôle de la vitesse de circulation du concentrat à l'intérieur de la boucle, et accessoirement des moyens de mesure de la température du concentrat à l'intérieur de la boucle.

4. Boucle de microfiltration (15) selon la revendication 3, caractérisée en ce que le débit du filtrat est contrôlé par une simple vanne, alors que le débit du concentrat est ajusté à une valeur de consigne déterminée, au moyen d'une vanne-proportionneuse (FRRC).

## Patentansprüche

1. Verfahren zum Abtrennen von feinen Katalysatorteilchen aus einer, aus einer katalytischen Spaltungseinheit (11) stammenden Kohlenwasserstoffcharge, dadurch gekennzeichnet, daß diese Charge durch eine mineralische Barriere (1) bestehend aus einem hitzebeständigen Kohlenstoffträger und auf der Seite der zu filtrierenden Charge aus einer empfindlichen Metalloxiddeckschicht, welche eine Porosität zwischen 1 und 100 µm aufweist, filtriert wird.

2. Verfahren nach Anspruch 1, in welchem die zu behandelnde Charge in einen Mikrofiltrationszyklus (15) geführt wird, welcher eine Anordnung von serienparallelen, mineralischen Mikrofiltrationsbarrieren umfaßt in deren Inneren ein Konzentrat zirkuliert wird, wobei ein aus diesen Barrieren ausfließendes Filtrat, mit Ausnahme der Teilchen, welche einen einen Minimaldurchmesser übersteigenden Durchmesser aufweisen, gewonnen wird und ein Teil dieses Konzentrates, welcher reich an diesen Teilchen ist, evakuiert wird, dadurch gekennzeichnet, daß das Verhältnis zwischen dem Austrag des Filtrates und dem Konzentrat in Abhängigkeit von der Qualität der verfügbaren Charge und dem gewünschten zu erhaltenden Filtrat durch Betätigung eines Proportionierventils (FRRC) eingestellt wird.

3. Mikrofiltrationszyklus (15) für die Durchführung des Verfahrens nach Anspruch 2, welcher eine Anordnung von serienparallelen, mineralischen Mikrofiltrationsbarrieren (2) umfaßt, welche aus einem zylindrischen, rohrförmigen Träger aus Kohlenstoff, welcher an seiner Innenseite mit einer (oder mehreren Oxidschichte(n) mit geeigneter Granulometrie ausgekleidet ist und welche ein Rohrleitungssystem in Form eines Zyklus bilden, besteht, in dessen Innerem das Konzentrat zirkulieren kann, Mittel zum Einbringen der Charge in den Zyklus in Form einer Zuführungsleitung (11) und eine Pumpe (13) für die Charge und Austrageinrichtungen für das Filtrat (19) und das Konzentrat (20), dadurch gekennzeichnet, daß unter anderen Einrichtungen zur Messung und Kontrolle der Ausbeute, gegebenenfalls Einrichtungen zur Messung und Kontrolle der Umlaufgeschwindigkeit des Konzentrates im Inneren des Zyklus und zusätzlich Einrichtungen zur Messung und Kontrolle der Temperatur des Konzentrates im Inneren des Zyklus enthalten wird.

4. Mikrofiltrationszyklus (15) nach Anspruch 3, dadurch gekennzeichnet, daß die Ausbeute an Filtrat mit einem einfachen Ventil kontrolliert wird, während jedoch die Ausbeute an Konzentrat auf einen bestimmten Wert, mit Hilfe eines Proportionierventils (FRRC) eingestellt wird.

**Claims**

1. A process for the separation of fine particles of catalyst from a hydrocarbonic charge leaving a catalytic cracking unit (11), characterised in that said charge is filtered through mineral microfiltration barriers (1) formed by a heat-resistant carbon support which, on the side of the charge to be filtered, is coated with a sensitive layer of metal oxide(s) having a porosity of between 1 and 100 µm.

2. A separation process according to claim 1, characterised in that the charge to be treated is directed towards a microfiltration loop (15) comprising a series-parallel assembly of mineral microfiltration barriers, inside which a concentrate is caused to circulate, a filtrate leaving these barriers free of particles of a diameter larger than a minimum diameter is collected, and a portion of said concentrate, which has a high content of these same particles, is removed, characterised in that the ratio between the flow of the filtrate and that of the concentrate is varied, according to the properties of the available charge and of the filtrate which it is desired to collect, by actuating a regulating valve (FRRC).

3. A microfiltration loop (15) for carrying out the process according to claim 2, comprising a series-parallel assembly of mineral microfiltration barriers (2) formed by a support in the form of a cylindrical tube of carbon covered on the inside with one or more layers of oxide, of suitable particle size, connected by a pipe system arranged in the form of a loop, within which the concentrate can circulate, means for introducing the charge into said loop in the form of an inlet duct (11) and a charging pump (13), and filtrate and concentrate-discharging means (19) and (20) respectively, characterised in that it further comprises flow measuring and control means, optionally means for measuring and controlling the speed of cirulation of the concentrate inside the loop, and additionally means for measuring the temperature of the concentrate inside the loop.

4. A microfiltration loop (15) according to claim 3, characterised in that the flow of filtrate is controlled by a simple valve, whereas the flow of concentrate is adjusted to a given rated value by means of a regulating valve (FRRC).

2a 2b 2c

3

1

4

FIG.1

6

5

FIG. 2

Effluents du réacteur

Colonne de fractionnement principal

11

LC

FC

Strippeur

12

LC

13

14

15

Concentrat

20

FRRC

DPC

Filtrat

Eléments filtrants

19

FC

17

18

16

Pompe de circulation

EP 0 216 711 B1